# EUROPÄISCHE PATENTSCHRIFT

(11) **EP 0 596 149 B1**
(45) Veröffentlichungstag und Bekanntmachung des Hinweises auf die Patenterteilung: **16.10.1996**
(21) Anmeldenummer: 92118803.3
(22) Anmeldetag: 03.11.1992
(51) Int. Cl.: C08G 73/10

(54) **Lösungen von polyimidbildenden Ausgangsstoffen**
Solutions of polyimide precursors
Solutions de précurseurs de polyimides

(43) Veröffentlichungstag der Anmeldung: 11.05.1994
(73) Patentinhaber: BASF Lacke + Farben Aktiengesellschaft, 48136 Münster (DE)
(72) Erfinder: Blum, Rainer, W-6700 Ludwigshafen (DE); Heller, Hans Joachim, Dr., W-2000 Hamburg 55 (DE); Lienert Klaus, Dr., W-2000 Hamburg 50 (DE)
(74) Vertreter: Karau, Wolfgang, Dr.

(56) Entgegenhaltungen:
- EP-A- 287 355
- EP-A- 336 374
- EP-A- 0 238 716
- EP-A- 0 396 528
- EP-A- 0 424 805
- EP-A- 0 450 979

## Beschreibung

Die Erfindung betrifft Lösungen von polyimidbildenden Ausgangsstoffen, enthaltend Diamine und Tetracarbonsäurediester, wobei es sich bei den Tetracarbonsäurediestern um ein Gemisch aus
- 5 bis 95 mol-%: Oxydiphthalsäurediester und
- 5 bis 95 mol-%: Benzophenontetracarbonsäurediester, Biphenyltetracarbonsäurediester oder deren Mischungen handelt, wobei sich die Angabe mol-% auf die Gesamtmenge an Tetracarbonsäurediester bezieht.

Weiterhin betrifft die Erfindung die Verwendung dieser Lösungen zur Herstellung von Überzügen.

Polyimide werden in zunehmendem Maße zur Beschichtung von Metalldrähten, Glas- und Quarzfasern sowie Substraten aus Silicum (Silicium-Wafer) eingesetzt. Insbesondere finden sie Verwendung in der Elektronik und Mikroelektronik z. B. als Zwischen- oder Deckschichten beim Aufbau von Schaltungen.

Die Substrate werden dabei im allgemeinen mit Lösungen von Polyimiden oder Polyamidsäuren beschichtet, wobei im Falle der Polyamidsäure die Imidisierung dann auf der Substratoberfläche erfolgt.

Die Lösungen von Polyimiden und Polyamidsauren müssen jedoch relativ niedrigkonzentriert sein, damit sich eine für die Verarbeitung ausreichend geringe Viskosität einstellt. Typische Handelsprodukte haben in der Regel nur 12 bis 20 Gew.-% Feststoffgehalt.

Aus der niedrigen Konzentration ergibt sich ein hoher Schrumpf bei der Trocknung. Dieser Schrumpf führt zu einer mehr oder weniger starken Abformung der unter der Polyimid-Schicht liegenden Struktur in die Polyimid-Oberfläche.

Vor allem bei z. B. für Schaltungen notwendigen mehrlagigen Beschichtungen ergeben sich Ungenauigkeiten im Aufbau.

Aus diesem Grunde sowie zur Vermeidung von zu großen Lösungsmittelmengen sind höher konzentrierte Lösungen erwünscht. Höhere Konzentrationen sind prinzipiell möglich mit Lösungen, welche lediglich die Ausgangsstoffe für die Polyimide enthalten. Da Lösungen von Tetracarbonsäuredianhydriden und Diaminen jedoch nicht lagerstabil sind und mit der Zeit polymerisieren, werden statt der Tetracarbonsäuredianhydride Tetracarbonsäurediester eingesetzt.

In der US-A-3 700 649 werden Lösungen von Benzophenontetracarbonsäurediestern und Diaminen mit einer sehr geringen Basizität zur Herstellung von Polyimidbeschichtungen beschrieben.

Die US-A-4 874 835, betrifft Lösungen von Diaminen und Diestern der Oxydiphthalsäure mit Alkanolen.

Aus der US-A-4 960 824, sind Lösungen von Diestern araliphatischer Tetracarbonsäuren mit Alkanolen und mindestens einem Diamin, ausgewählt aus m-Phenylendiamin, p-Phenylendiamin oder 4-Aminophenylether bekannt.

Die EP-A 287 356 bezieht sich auf polyimidbildende Lösungen aus 2,2-bis[4-(4-aminophenoxy)-phenyl]hexafluoropropan oder 2,2-bis[4-(3-aminophenoxy)-phenyl]-hexafluoropropan, Dialkylestern von aromatischen Tetracarbonsäuren und Polyamidsäuren aus diesen Ausgangsstoffen. Der Anteil an Polyamidsäuren soll die Löslichkeit der Gesamtmischung soweit verbessern, daß keine festen Niederschläge mehr entstehen und die Viskosität soweit erhöhen, daß die Lösungen für den speziellen "pseudo hot-melt process" einsetzbar sind. Die Stoffe sind dann Harze mit Erweichungspunkten von 30 - 40°C und mit Schmelzviskositäten von 2000 - 12000 mm²/s (centistokes) bei 60°C.

Die EP-A 336 374 ist eine Weiterführung der EP-A 287 356, in der die Verflüssigung der festen Harze bei der Applikation, z. B. auf Kohlenstoff- oder Glasfasern, mit Mikrowellen erfolgt, ohne daß dabei das reaktive Harz eine unerwünschte Veränderung erfährt. Polyimidbeschichtungen, welche aus Lösungen der Ausgangsstoffe hergestellt werden, weisen bisher jedoch noch vielfältig Nachteile, wie Blasenbildung und ungenügende Planarität der Beschichtungen auf.

Aufgabe der vorliegenden Erfindung war es daher, diesen Nachteilen abzuhelfen.

Demgemäß wurden die eingangs definierten Lösungen sowie ihre Verwendung zur Herstellung von Polyimidbeschichtungen gefunden.

Es hat sich gezeigt, daß besonders vorteilhafte Polyimidbeschichtungen erhalten werden, wenn als Tetracarbonsäurediester eine Mischung aus 5 bis 95, insbesondere 20 bis 80 mol-% Oxydiphthalsäurediester und 5 bis 95, insbesondere 20 bis 80 mol-% Benzophenontetracarbonsäurediester, Biphenyltetracarbonsäurediester oder deren Mischungen verwendet werden. Die Angabe mol-% bezieht sich auf die Gesamtmenge an Tetracarbonsäurediester.

Als mögliche isomere Formen des Oxydiphthalsäurediesters seien insbesondere solche genannt, die sich von der 3,3'- oder 4,4'-Oxydiphthalsäure ableiten.

Als mögliche Isomere des Benzophenontetracarbonsäurediester und Diphenyltetracarbonsäurediesters seien insbesondere solche genannt, die sich von der 3,3',4,4'- oder 2,2',3,3'-Biphenyltetracarbonsäure bzw. der 3,3',4,4'- oder 2,2',3',3'-Benzophenontetracarbonsäure ableiten.

Die Estergruppen in den Tetracarbonsäurediestern können sich z.B. von C₁-C₈-Alkanolen ableiten.

Bevorzugt leiten sich die Estergruppen zumindest zu 2 mol.-%, bezogen auf alle Estergruppen, von Alkoholen der allgemeinen Formel

HO-Z-O-X I

oder

HO-Z-X II

ab, worin Z für einen geradlinigen oder verzweigten aliphatischen Rest aus 1 bis 15, bevorzugt 1 bis 8 Kohlenstoffatomen, welcher durch 1 bis 4, bevorzugt 1-2 Ethergruppen -O-unterbrochen sein kann und X für einen aromatischen Rest aus 5 bis 20 Kohlenstoffatomen, welcher auch Stickstoff, Sauerstoff oder Schwefel im aromatischen Ringsystem enthalten kann, steht. Ganz besonders bevorzugt steht X für einen Phenylring und Z für einen C₁-C₆ Alkylenrest.

Als Alkohole der Formel I zu nennen sind beispielsweise Monophenoxyethylenglycol oder Monophenoxypropylenglycol.

Als Alkohole der Formel II sind beispielsweise zu nennen Benzylalkohol, 1-Hydroxy-, 2-Phenylethan und 1-Hydroxy, 3-Phenylpropan.

Des weiteren können in untergeordneten Mengen auch polyfunktionelle Alkohole eingesetzt werden.

Bevorzugt leiten sich mindestens 10 besonders bevorzugt mindestens 30 mol.-% der Estergruppen in den Diestern von Alkoholen der allgemeinen Formel I oder II ab.

Ganz besonders bevorzugt leiten sich alle Estergruppen in den Diestern von Alkoholen der allgemeinen Formel I oder II ab.

Die Herstellung der Tetracarbonsäurediester kann in einfacher Weise durch Veresterung der Tetracarbonsäuredianhydride mit den oben genannten Alkoholen nach bekannten Methoden erfolgen. Bei der Veresterung werden die Säureanhydridringe gespalten, wobei aus einem Säureanhydridring eine Estergruppe und eine Carbonsäuregruppe hervorgeht. Eine weitere Veresterung der noch verbleibenden Carbonsäuregruppen findet weitgehend nicht statt, so daß Tetracarbonsäuretetra- oder -triester auch bei hohem Überschuß des Alkohols nur in untergeordneten Mengen entstehen. Die Veresterung wird bevorzugt bei Temperaturen zwischen 50 und 150°C durchgeführt. Gegebenenfalls können auch Veresterungskatalysatoren, z. B. Dimethylaminopyridin, zugesetzt werden.

Die Tetracarbonsäurediester können auch nach anderen Methoden, z. B. durch direkte Veresterung der Tetracarbonsäuren hergestellt werden.

Als Diamine kommen insbesondere aromatische oder teilaromatische Diamine, welche mindestens einen aromatischen Ring enthalten, in Betracht. Es kann sich dabei um Diamine mit einem aromatischen Ring, mit kondensierten aromatischen Ringsystemen oder aromatische Ringen, die z. B. durch eine Einfachbindung, eine Ether-, Carbonyl-, Sulfonylgruppe oder aliphatische Kohlenwasserstoffreste, insbesondere mit 1 bis 8 Kohlenstoffatomen und gegebenenfalls auch Heteroatomen wie Schwefel, Stickstoff oder Sauerstoff, verbunden sind, handeln. Die aromatischen Ringe bzw. Ringsysteme können als Substituenten insbesondere C₁- bis C₆-Alkyl- oder Alkoxygruppen oder Halogenatome wie Chlor und Fluor tragen.

Zu nennen sind beispielsweise:
Benzidin, Dimethylbenzidin, Dimethoxybenzidin, Diethoxybenzidin, Diaminodiphenylsulfon, Diaminodiphenylpropan, Diaminodiphenylsulfid, 4,4'-Bis[2-(4-aminophenyl)propan]phenylen/Bisanilin P, 4,4'-Dimethyl-3,3'-diaminodiphenylsulfon, 4,4'-Dimethyl-3,3'-diaminodiphenylsulfid, p-Phenylendiamin, m-Phenylendiamin, Diethyltoluylendiamin, Diaminomethoxybenzol, Xylylendiamin, Diaminocumen, Diaminonaphthalin, Diaminonaphthol, Diaminonaphthochinon, Diaminoanthracen, Diaminoanthrachinon, Diaminophenanthren, 9,10-Bis(4-aminophenylanthracen, 3,5-Diethyl-2,4-diaminotoluol, 3,5-Diethyl-2,6-diaminotoluol, Diisopropylphenylendiamin, 4,4'-Methylen-bis-(2,6-diisopropylanilin), 4,4'-Methylen-bis-(2-methyl-6-isopropylanilin), 2,6-Diisopropylanilin,
1,3-Diamino-4-methoxybenzol, Hexafluoro-2,2-bis(3-amino-4,5-dimethylphenyl)propan, 2,2-Bis(4,4'-aminophenyl)-propan, Bis(4,4'-aminophenyl)sulfon, Bis(4,4'-aminophenyl)sulfid, Bis(3,3'-aminophenyl)sulfon,
Bis (3,3'-aminophenyl) sulfid, 2,2-Bis [4- (4-aminophenoxy))phenyl]propan, 2,2-Bis[4-(4-aminophenoxy)phenyl]hexafluorpropan, Bis[4-(4-aminophenoxy)phenyl]sulfon, Bis[4-(4-aminophenoxy)phenyl]sulfid, 2,2-Bis[4(3-aminophenoxy)phenyl] hexafluorpropan, Bis[4-(3-aminophenoxy)phenyl]sulfon,
Bis-[4-(3-aminophenoxy)phenyl]sulfid, 4,4'-Bis(4-aminophenoxy)biphenyl, 4,4'Bis(3-aminophenoxy)biphenyl,
1,4'-Bis(4-aminophenoxy)phenylen, 1,3'-Bis(4-aminophenoxy)phenylen, Diaminodiphenylmethan, Diaminodiphenoxyphenylsulfon, Diaminodiphenoxyphenylsulfid, Diaminodiphenyloxid, Diaminopyridin, Bis-(4-aminophenyl)dialkylsilane, 3,3'-Dihydroxy-4,4'-diaminobiphenyl, 9,9'-Bis(4-amino)fluoren, o-Toluidinsulfon, Diaminobenzanilid, Acridindiamin und Methylenbisanthranilsäureamid.

Von technischer Bedeutung sind vor allem Diaminodiphenylmethan, Diaminodiphenyloxid, 2,2-Bis[4-(4-aminophenoxy)phenyl]propan, Diaminodiphenylsulfid, Diaminodiphenylsulfon. Geeignet sind insbesondere auch Gemische von Diaminen.

Als Lösungsmittel für die Tetracarbonsäurediester und Diamine eignen sich z. B. polare organische Lösungsmittel, wie aliphatische oder aromatische Alkohole, Ether, Ketone, Aldehyde oder Ester.

Bevorzugt werden hochpolare Lösungsmittel wie N-Methylpyrrolidon, Formamid, Dimethylformamid, Alkylalkylendiharnstoffe wie Dimethylethylendiharnstoff oder Dimethylpropylendiharnstoff. Dimethylsulfoxid, Butyrolacton, Pyrrolidon, Dialkylacetamid aber auch Glykole, Glykolester und Glycolether verwendet.

Als Lösungsmittel empfiehlt sich naheliegenderweise auch der bei der Herstellung der Tetracarbonsäurediester üblicherweise im Überschuß eingesetzte Alkohol.

Die Wahl des Lösungsmittels oder Lösungsmittelgemisches hängt im wesentlichen nur von der Löslichkeit, bzw. der Polarität der Tetracarbonsäurediester und Diamine ab.

Gegebenenfalls können auch nichtpolare Lösungsmittel wie aliphatische oder aromatische Kohlenwassrstoffe in Lösungsmittelgemischen Mitverwendung finden.

Die erfindungsgemäßen Lösungen enthalten die Tetracarbonsäuredieester und das Diamin vorzugsweise im Molverhältnis von 1,5:1 bis 1:1,5, besonders bevorzugt ist das Molverhältnis ca. 1:1.

Der Feststoffgehalt der Lösungen beträgt vorzugsweise 30 bis 60 Gew.-%.

Zur Herstellung der Lösungen können Tetracarbonsäurediester, Diamin und Lösungsmittel in beliebiger Reihenfolge zusammengegeben werden. Zum Beispiel ist es möglich zunächst den Tetracarbonsäurediester durch Umsetzung eines Tetracarbonsäuredianhydrids mit einem Überschuß an Alkohol herzustellen und zum erhaltenen Gemisch das Diamin und gegebenenfalls weiteres Lösungsmittel zu geben. Um alle Komponenten in Lösung zu bringen, wird, falls erforderlich, bei Raumtemperatur oder auch erhöhter Temperatur, z. B. zwischen 30 und 120°C, insbesondere 40-80°C, gerührt.

Die erfindungsgemäßen Lösungen können übliche Zusatzstoffe, wie Katalysatoren für die Imidbildung, Farbstoffe, Pigmente, Füllstoffe, Verlaufsmittel und viskositätsregulierende Stoffe enthalten.

Sie eignen sich als Beschichtungsmittel zur Herstellung von Überzügen auf unterschiedlichsten Substraten, z. B. Metall, Glas oder Silicium. Die Härtung der Beschichtung erfolgt vorzugsweise bei Endtemperaturen zwischen 150° und 450°C, besonders bevorzugt zwischen 300 und 400°C. Es hat sich als besonders vorteilhaft erwiesen den Härtungsprozeß mehrstufig durch stufenweises Erhöhen der Temperatur bis zur Endtemperatur durchzuführen.

Mit den erfindungsgemäßen Lösungen können auch in großer Schichtdicke blasenfreie, planare Beschichtungen hergestellt werden.

### Beispiele

### Abkürzungen

- ODPA: Oxydiphthalsäuredianhydrid
- PMDA: Pyromellithsäuredianhydrid
- BTDA: Benzophenontetracarbonsäuredianhydrid
- BAPP-DA: 2,2'-Bis[4(3.4-dicarboxyphenoxy)phenylpropandianhydrid
- 6F-BPDA: Hexafluoroisopropyliden-2-2-bis(phthalsäureanhydrid
- BPDA: Biphenyltetracarbonsäuredianhydrid
- DADO: Diaminodiphenyloxid
- BAPP: 2,2-Bis[-(4-aminophenoxy)phenyl]propan
- HF-BAPP: 2,2-Bis[-(4-aminophenoxy)phenyl]hexafluorpropan
- m-PDA: m-Phenylendiamin
- p-PDA: p-Phenylendiamin
- MEG: Monophenoxyethylenglykol
- MPG: Monophenoxypropylenglykol
- BZA: Benzylalkohol
- E: Ethylalkohol
- M: Methanol
- S 100: Solvesso 100® (C₁-C₆-Alkylbenzolgemisch der Firma ESSO)
- NMP: N-Methylpyrrolidon
- DMAC: Dimethylacetamid
- BLAC: Butyrolacton
- DMAP: Dimethylaminopyridin

In den folgenden Beispielen und Vergleichsbeispielen wurden zunächst durch Umsetzung der Tetracarbonsäuredianhydride mit Alkohol bei 100°C (30 min) und in Gegenwart von Dimethylaminopyridin als Katalysator und der ersten Teilmenge NMP die Tetracarbonsäurediester hergestellt. Nach Abkühlen auf 60°C wurden die Diamine sowie gegebenenfalls weiteres Lösungsmittel zugesetzt und gerührt bis eine Lösung entstanden war.

### Ausgangsstoffe

### Beispiel 1

- 27,92 g: ODPA (0.09 Mol)
- 3,23 g: BTDA (0.01 Mol)
- 1,53 g: MPG (0,01 Mol)
- 5,44 g: M (0,17 Mol)
- 0,36 g: Wasser (0,02 Mol)
- 27,39 g: NMP
- 0,25 g: DMAP
- 41,02 g: BAPP (0,10 Mol) und
- 30,00 g: NMP

### Beispiel 2

- 15,51 g: ODPA (0,05 Mol)
- 16,15 g: BTDA (0,05 Mol)
- 13,80 g: E (0,30 Mol)
- 20,00 g: NMP
- 0,25 g: DMAP
- 20,00 g: DADO (0,10 Mol) und
- 21,34 g: NMP

### Beispiel 3

- 14,71 g: BPDA (0.05 Mol)
- 15,51 g: ODPA (0.05 Mol)
- 13,80 g: E
- 20,00 g: NMP
- 0,25 g: DMAP
- 20,00 g: DADO (0,10 Mol) und
- 19,58 g: NMP

### Vergleichsbeispiel 1

- 31,02 g: ODPA (0,10 Mol)
- 9,20 g: E (0,20 Mol)
- 5,17 g: NMP
- 0,25 g: DMAP
- 10,80 g: p-PDA (0,10 Mol) und
- 20,00 g: NMP

### Vergleichsbeispiel 2

- 32,30 g: BTDA (0,10 Mol)
- 13,80 g: E (0,30 Mol)
- 20,00 g: NMP
- 0,25 g: DMAP
- 20,00 g: DADO (0,10 Mol) und
- 22,20 g: NMP

### Vergleichsbeispiel 3

- 31.02 g: ODPA (0.10 Mol)
- 13.80 g: E (0,30 Mol)
- 20,00 g: NMP
- 0,25 g: DMAP
- 20,00 g: DADO (0,10 Mol) und
- 20,55 g: NMP

### Vergleichsbeispiel 4

- 29,42 g: BPDA (0,10 Mol)
- 13,80 g: E (0,30 Mol)
- 20,00 g: NMP
- 0,25 g: DMAP
- 20,00 g: DADO (0,10 Mol) und
- 18,82 g: NMP

### Vergleichsbeispiel 5

- 32,50 g: BTDA-Diethylester (0,079 Mol)
- 76,00 g: Dioxan/NMP 2:1 wurden vorgelegt und dazu eine Lösung aus
- 23,30 g: DADO (0,17 Mol) in
- 54,00 g: Dioxan/NMP gegeben.

### Prüfung der Beispiele

Zur Prüfung wurden die Lacke mit einer Rakel mit keilförmigem Spalt von 0 bis 1000 µm, auf entfettete Stahlbleche aufgerakelt, in einen auf 50°C vorgeheizten, programmgesteuerten Ofen gelegt, mit einer Rate von 5°C/Minute auf 350°C geheizt, 30 Min. bei dieser Temperatur gehalten, aus dem Ofen entnommen und auf Raumtemperatur abgekühlt.

In der Regel haben die Filme dann auf der dickbeschichteten Seite Blasen. Dabei kann es sich um einzelne, mehr oder mindergroße Blasen handeln, oder um schaumstoffartige Schichten. Mit einem magnetischen Schichtdickenmeßgerät wurde die Schichtdicke bestimmt bei der sich die ersten Blasen zeigen (dₘₐₓ).

Des weiteren wurde die Sprödigkeit der Filme beurteilt.

In der Tabelle sind zusätzlich der Feststoffgehalt der Lösungen (Summe aus Gewichtsanteilen der Tetracarbonsäurediester und Amine) und ihre Lösungsviskosität angegeben.

Auch der Imidisierungsrückstand (Masse nach zweistündiger Imidisierung bei 400°C bezogen auf die Masse der Lösung) und der Wasserverlust bei der Imidisierung (Differenz von Feststoffgehalt und Imidisierungsrückstand) wurden berechnet.

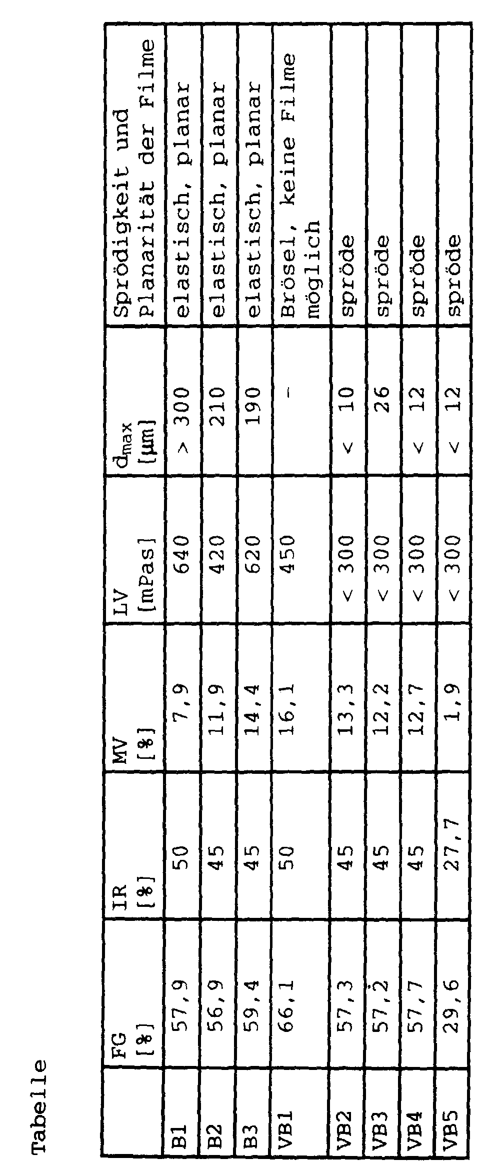

## Patentansprüche

1. Lösungen von polyimidbildenden Ausgangsstoffen, enthaltend Diamine und Tetracarbonsäurediester, wobei es sich bei den Tetracarbonsäurediestern um ein Gemisch aus
5 bis 95 mol-% Oxydiphthalsäurediester und
5 bis 95 mol-% Benzophenontetracarbonsäurediester, Biphenyltetracarbonsäurediester oder deren Mischungen
handelt, wobei sich die Angabe mol-% auf die Gesamtmenge an Tetracarbonsäurediester bezieht.

2. Verwendung von Lösungen von polyimidbildenden Ausgangsstoffen gemäß Anspruch 1 zur Herstellung von Überzügen.

## Claims

1. Solutions of polyimide-forming starting materials, containing diamines and tetracarboxylic diesters, wherein the tetracarboxylic diesters comprise a mixture of
from 5 to 95 mol% of oxydiphthalic diesters and
from 5 to 95 mol% of benzophenonetetracarboxylic diesters, biphenyltetracarboxylic diesters or mixtures thereof,
the mole percentages being based on the total amount of tetracarboxylic diesters.

2. Use of solutions of polyimide-forming starting materials as claimed in claim 1 for preparing coatings.

## Revendications

1. Solutions de matières premières de formation de polyimides, contenant des diamines et des diesters d'acides tétracarboxyliques, les diesters d'acides tétracarboxyliques consistant en un mélange de
5 à 95 mol % de diesters d'acides oxydiphtaliques et
5 à 95 mol % de diesters d'acides benzophénonetétracarboxyliques, de diesters d'acides biphényltétracarboxyliques ou leurs mélanges,
les indications de mol % se rapportant à la quantité totale des diesters d'acides tétracarboxyliques.

2. Utilisation des solutions de matières premières de formation de polyimides selon la revendication 1 pour la fabrication de revêtements.
